# EUROPEAN PATENT SPECIFICATION

(11) **EP 1 552 887 B1**
(45) Date of publication and mention of the grant of the patent: **17.02.2010**
(21) Application number: 04026799.9
(22) Date of filing: 11.11.2004
(51) Int. Cl.: B01L 3/02

(54) **Device and method for printing biomolecules onto substrate using electrohydrodynamic effect**
Vorrichtung und Verfahren zum Drucken von Biomolekülen auf ein Substrat unter Ausnutzung von elektrohydrodynamischen Effekten
Dispositif et procédé pour imprimer des bimolécules sur un substrat au moyen d' un effet electrohydrodynamique

(30) Priority: 07.01.2004 KR 2004000882
(43) Date of publication of application: 13.07.2005
(73) Proprietor: SAMSUNG ELECTRONICS CO., LTD., Suwon-si, Gyeonggi-do (KR)
(72) Inventor: Cho, Hye-jung, Anyang-si Gyeonggi-do (KR); Lee, Jeong-gun, Gunpo-si Gyeonggi-do (KR)
(74) Representative: Grünecker, Kinkeldey, Stockmair & Schwanhäusser Anwaltssozietät

(56) References cited:
- EP-A- 1 386 657
- EP-A- 1 445 016
- US-B1- 6 284 113
- M.G. POLLACK ET ALL: "Electrowetting-based actuation of droplets for integrated microfluidics" LAB CHIP, vol. 2, 2002, pages 96-101, XP002369098

## Description

### BACKGROUND OF THE INVENTION

### 1. Field of the Invention

The present invention relates to a device and method for printing biomolecules onto a substrate using an electro hydrodynamic (EHD) effect, and more specifically to a device and method for printing biomolecules onto a substrate using an EHD effect by dropping a solution of biomolecules such as nucleic acids (such as probe DNA, RNA, peptide nucleic acid (PNA) and LNA), proteins (such as antigen and antibody), and oligopeptides, onto a solid substrate surface and fixing the biomolecules onto the substrate, to produce a biochip or a DNA microarray.

### 2. Description of the Related Art

As the human genome project makes great progress, there is an increasing need for methods for rapidly providing a large amount of genetic information for the diagnosis, treatment and prevention of genetic disorders. Since Sanger's method was used to analyze a sequence of nucleotides, a polymerase chain reaction (PCR) method for the reproduction of DNA has been developed and automated. However, the PCR method is troublesome and demands much time, labor, skill and expense, and thus can not be used to analyze a large number of genes. Thus, there has been a continuing search for new systems of analyzing a sequence of nucleotide, and for several years there has been advances in many fields relating to the manufacture and application of a biochip or DNA microarray.

A biochip or DNA microarray refers to a chip manufactured by microarraying oligonucleotide probes, each probe having a known sequence of up to hundreds of nucleotides, at hundreds to hundreds of thousands of predetermined positions on a solid surface made of, for example, silicon, surface-modified glass, polypropylene, or activated polyacrylamide. If a fragment of target DNA to be analyzed is applied to the biochip or DNA microarray, the target DNA complementarily hybridizes to the oligonucleotide probes immobilized on the biochip or DNA microarray. The hybridization is optically or radiochemically detected and analyzed to identify the nucleotide sequence of the target DNA, which is called sequencing by hybridization (SBH).

Use of the biochip or DNA microarray reduces the size of a DNA analysis system and enables genetic analysis with a trace of sample. In addition, multiple sequences of a target DNA can be simultaneously analyzed, thereby rapidly providing the genetic information of the target DNA at low cost. The biochip or DNA microarray can analyze a large amount of genetic information simultaneously within a short period of time and reveal correlation between the genes. Accordingly, the biochip or DNA microarray is expected to have many applications, for example, in genetic disorder and cancer diagnosis, mutant and pathogen detection, gene expression analysis, drug discovery, etc. In addition, the biochip or DNA microarray can be used as a microorganism or pollutant detector to find antidotal genes and also to produce antidotes on a large scale based on genetic recombination technologies. The biochip or DNA microarray can lead to great improvements in most biological industries, including the production of medicinal crops or low-fat meat.

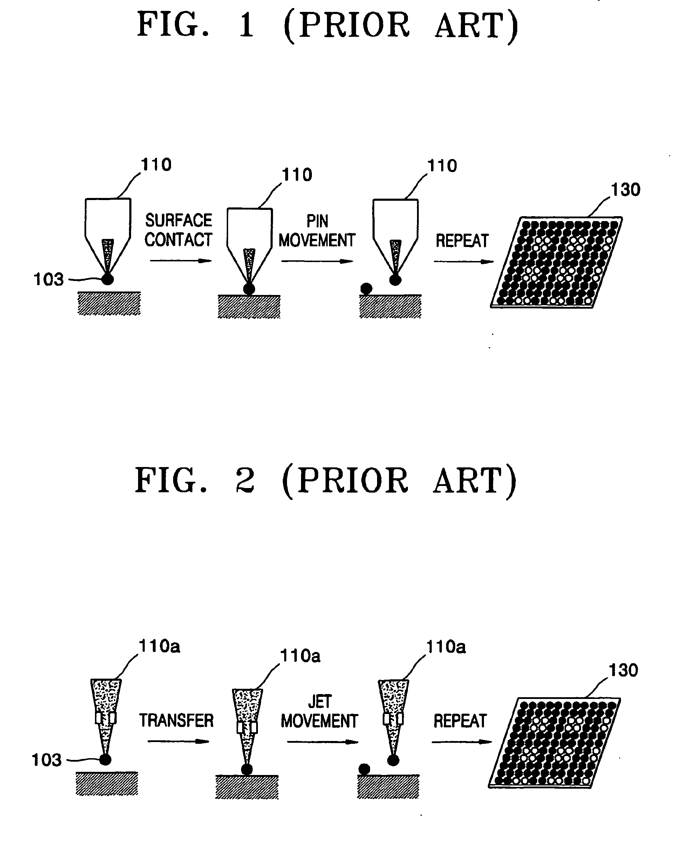

Biochips or DNA microarrays can be either an oligo-chip or a cDNA chip, according to the type of probes immobilized thereon. Also, biochips or DNA microarrays can be manufactured by lithography, pin spotting, or ink-jet spotting. FIGS. 1 and 2 are views illustrating conventional methods for printing biomolecules onto a substrate using a pin and an inkjet, respectively. The conventional methods comprise dropping a solution 103 of biomolecules such as nucleic acids (such as probe DNA, RNA, peptide nucleic acid (PNA) and LNA), proteins (such as antigen and antibody), and oligopeptides, onto the surface of a solid substrate 130 using a pin 110 or inkjet 110a and fixing the biomolecules into a biochip or DNA microarray 130.

However, the method using a pin has many problems. After biomolecules are printed with the pin, the pin is washed and then used to print other biomolecules. Thus, at least 99% of the biomolecules are wasted. Also, the size of the spots is somewhat irregular; sometimes the pin is blocked, and the life span of the pin is not long. Furthermore, the concentration of biomolecules changes depending on spotting time and it takes long time to print using capillary necking. First of all, there is a need for correct alignment in this method. Also, if the inkjet method uses a bubble jet process, it is necessary to use a momentary ultrahigh temperature. Thus, heat-sensitive biomolecules are likely to be adversely affected and the nozzle can become blocked.

To overcome the problems, a method for printing biomolecules onto a substrate using an electric field has been reported, for example, in EP 1157737. Using the fact that a probe DNA solution has a negative charge, this method involves applying a negative charge across a capillary holder 120 and a positive charge to a substrate 130 using a voltage applying unit 160, thereby dropping the probe DNA solution 103 from a capillary 110 onto the substrate 130 by attraction force.

However, the device and method for printing biomolecules onto a substrate using the electric field has the problem that the substrate must be always positively charged, and accordingly an alternating current (AC) voltage may not be used. In practice, the DNA solution comprises various salts, thereby having a substantial positive charge. Thus, when only a direct current (DC) voltage is applied to the device, the probe DNA solution cannot be printed well, causing difficulty in practical use. Furthermore, proteins are not necessarily always negatively charged, and some nucleic acids, for example, peptide nucleic acids (PNAs) have neutral charges, and thus it is impossible to apply the device and the method to those biomolecules.

### SUMMARY OF THE INVENTION

The present invention provides a device and method for printing biomolecules onto a substrate using an electrohydrodynamic (EHD) effect. The advantages of the device and method are that the process is quick, the biomolecule spots are easily aligned, and especially it is possible to spot the biomolecules correctly and reproducibly even when the printer body is not fully aligned with the substrate. In addition, the device and method are applicable to proteins which are sensitive to heat, and biomolecules which have neutral charges.

The present invention also provides a device and method for printing biomolecules onto a substrate using an EHD effect, permitting integration of silicon.

According to an aspect of the present invention, there is provided a device for printing biomolecules onto a substrate using an EHD effect, comprising; at least one capillary having an outlet through which a feeding solution of biomolecules selected from the group consisting of nucleic acids, proteins, and oligopeptides is discharged, the nucleic acids being selected from the group consisting of probe DNA, RNA, peptide nucleic acid (PNA), and LNA and the proteins being selected from the group consisting of antigen and antibody; a printer body supporting the at least one capillary; a substrate below the outlet having a target surface onto which the biomolecules are deposited; a first electric field forming electrode located on the printer body around the circumference of the outlet; a second electric field forming electrode spaced apart from the first electrode by a predetermined distance; and a voltage applying unit which is electrically connected to the first electrode and the second electrode to apply an alternating current (AC) voltage between the first electrode and the second electrode so that an electric field may be formed around the biomolecule solution suspended in the outlet, and due to the interaction of the electric field and a difference in dielectric constant between the biomolecule solution having a free surface and the surrounding atmosphere, the electric force acts inward on the biomolecule solution from the surroundings, thereby dropping a predetermined amount of the biomolecule solution onto the target surface of the substrate.

The voltage applying unit is capable of applying an AC voltage and a direct current (DC) voltage simultaneously, and the DC voltage can be applied substantially simultaneously when the AC voltage is applied for forming an electric field. This is advantageous for reducing the time of printing biomolecules.

In general, the DC voltage is in the range of 500 to 300,000 V and the AC voltage is in the range of 500 to 300,000 V.

The AC voltage may have a frequency of 40 to 1,000 Hz.

The substrate may be made of silicon. This is advantageous since it permits integration of silicon.

The first electric field forming electrode may be a circular electrode made of gold.

The device may further comprise a circular conductive band opposite the first electric field forming electrode and surrounding the target surface on the substrate.

In this case, the circular conductive band is approximately perpendicular to the outlet.

Also, the circular conductive band may be the second electric field forming electrode and may be made of gold.

The second electric field forming electrode may be located in a stage supporting the substrate.

The substrate surface inside and outside the circular conductive band may be hydrophobic-treated so that the contact angle of the solution with the surface is large enough to prevent the solution from flowing outwards.

A plurality of capillaries may be supported by the printer body, and the outlets of the capillaries may be arranged at the same pitch as a plurality of target surfaces on the substrate. This is advantageous since it is possible to print many and various types of biomolecules at the same time.

According to another aspect of the present invention, there is provided a method for printing biomolecules onto a substrate using an EHD effect, comprising the operations of; feeding a solution of biomolecules selected from the group consisting of nucleic acids, proteins, and oligopeptides to a capillary having an outlet through which the biomolecule solution is discharged, the nucleic acids being selected from the group consisting of probe DNA, RNA, PNA, and LNA and the proteins being selected from the group consisting of antigen and antibody; and applying an AC voltage between a first electric field forming electrode around the circumference of the outlet and a second electric field forming electrode spaced apart from the first electrode by a predetermined distance from a voltage applying unit capable of applying an AC voltage which is electrically connected to the first electrode and the second electrode, so that an electric field may be formed around the biomolecule solution suspended in the outlet, and due to the interaction of the electric field and a difference in dielectric constant between the biomolecule solution having a free surface and the surrounding atmosphere, the electric force acts inward on the biomolecule solution from the surroundings, thereby dropping a predetermined amount of the biomolecule solution onto a target surface of a substrate below the outlet.

In the operation of applying an AC voltage, the DC voltage may be applied substantially simultaneously with the AC voltage. This is advantageous for reducing the time of printing biomolecules.

In general, the DC voltage is in the range of 500 to 300,000 V and the AC voltage is in the range of 500 to 300,000 V.

The AC voltage may have a frequency of 40 to 1,000 Hz.

The substrate may be made of silicon. This is advantageous since it permits integration of silicon.

The first electric field forming electrode may be a circular electrode made of gold.

A circular conductive band may be further located opposite the first electric field forming electrode and surrounding the target surface on the substrate.

In this case, the circular conductive band is approximately perpendicular to the outlet.

Also, the circular conductive band may be the second electric field forming electrode and may be made of gold.

The second electric field forming electrode may be in the form of a plate located in a stage supporting the substrate.

The substrate surface inside and outside the circular conductive band is hydrophobic-treated so that the contact angle of the solution with the surface is large enough to prevent the solution from flowing outwards.

A plurality of capillaries may be supported by the printer body, and the outlets of the capillaries may be arranged at the same pitch as a plurality of target surfaces on the substrate. This is advantageous since it is possible to print many and various types of biomolecules at the same time.

### BRIEF DESCRIPTION OF THE DRAWINGS

The above and other features and advantages of the present invention will become more apparent by describing in detail exemplary embodiments thereof with reference to the attached drawings in which:
FIG. 1 is a view illustrating a conventional method for printing biomolecules onto a substrate using a pin;
FIG. 2 is a view illustrating a conventional method for printing biomolecules onto a substrate using an inkjet;
FIG. 3 is a view illustrating a conventional method for printing biomolecules onto a substrate using an electric field;
FIG. 4 is a schematic cross-sectional view illustrating a device for printing biomolecules onto a substrate using an electrohydrodynamic (EHD) effect according to an embodiment of the present invention;
FIG. 5 is a bottom view of a printer body of the device in FIG. 4;
FIG. 6 is a plan view of a substrate of the device in FIG. 4;
FIG. 7 is a view illustrating the device in FIG. 4 showing an EHD force being applied to a solution of biomolecules;
FIG. 8 is a view illustrating the device in FIG. 4 showing the shape of the solution of biomolecules being changed by the EHD force;
FIG. 9 is a view illustrating the device in FIG. 4 showing the solution of biomolecules being divided by the EHD force;
FIG. 10 is a view illustrating the device in FIG. 4 showing the solution of biomolecules being printed onto the substrate after division;
FIG. 11 is a schematic cross-sectional view illustrating a device for printing biomolecules onto a substrate using an EHD effect according to another embodiment of the present invention;
FIG. 12 is a schematic cross-sectional view illustrating a device for printing biomolecules onto a substrate using an EHD effect according to another embodiment of the present invention;
FIG. 13 is a schematic cross-sectional view illustrating a device for printing biomolecules onto a substrate using an EHD effect according to another embodiment of the present invention;
FIG. 14 is a schematic cross-sectional view illustrating a device for printing biomolecules onto a substrate using an EHD effect according to another embodiment of the present invention;
FIG. 15 is a view illustrating a process for printing biomolecules onto a substrate using the device in FIG. 14;
FIG. 16 is a schematic cross-sectional view illustrating a device for printing biomolecules onto a substrate using an EHD effect according to another embodiment of the present invention;
FIGS. 17A through 17D are photographs showing the procedure for printing a solution of biomolecules onto a silicon substrate using the device in FIG. 4 according to an embodiment of the present invention;
FIGS. 18A through 18F are photographs showing the procedure for printing a solution of biomolecules onto a silicon substrate using the device in FIG. 13 according to another embodiment of the present invention; and
FIGS. 19A and 19B are photographs showing the procedure for printing a solution of biomolecules onto a silicon substrate using the device in FIG. 16 according to another embodiment of the present invention.

### DETAILED DESCRIPTION OF THE INVENTION

The invention now will be described in detail with reference to the accompanying drawings.

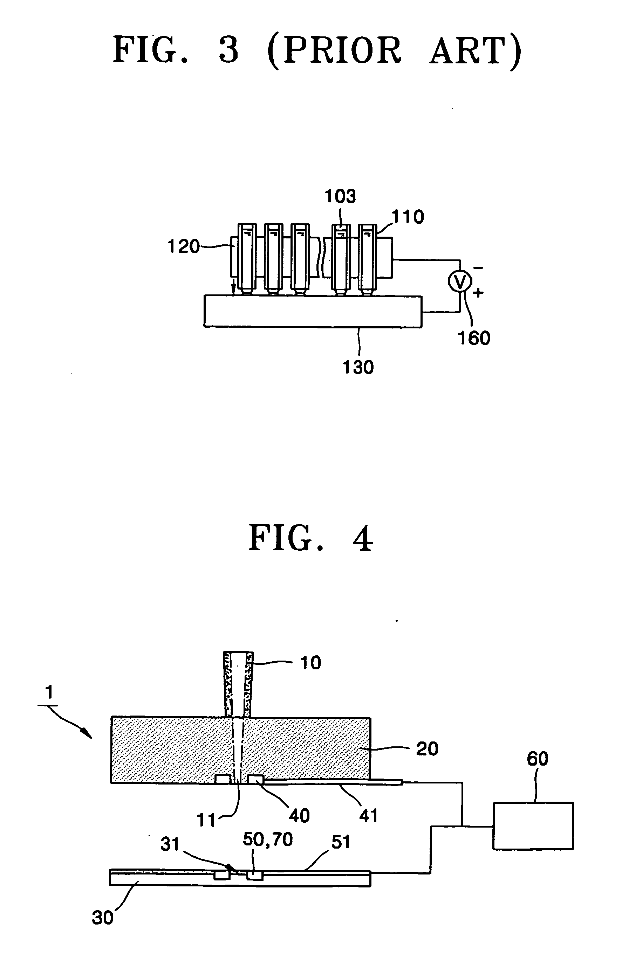

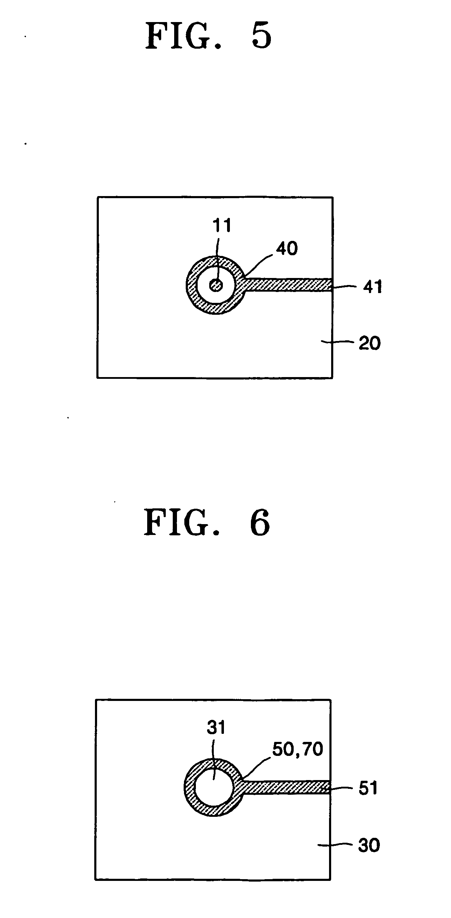

FIG. 4 is a schematic cross-sectional view illustrating a device for printing biomolecules onto a substrate using an electrohydrodynamic (EHD) effect according to an embodiment of the present invention. FIG. 5 is a bottom view of a printer body of the device in FIG. 4. FIG. 6 is a planar view of a substrate of the device in FIG. 4. As illustrated in FIGS. 4 through 6, the device 1 for printing biomolecules onto a substrate using an EHD effect comprises a capillary 10 having an outlet 11 through which a solution of biomolecules 3 is discharged; a printer body 20 supporting the capillary 10; a substrate 30 located below the outlet 11 and having a target surface 31 on which the biomolecules are deposited; a first electric field forming electrode 40 located on the printer body 20 around the circumference of the outlet 11; a second electric field forming electrode 50 spaced apart from the first electrode 40 by a predetermined distance; and a voltage applying unit 60 which is electrically connected to the first electrode 40 and the second electrode 50 to apply an alternating current (AC) voltage between the first electrode 40 and the second electrode 50.

The solution of biomolecules such as nucleic acids (such as probe DNA, RNA, peptide nucleic acid (PNA) and LNA), proteins (such as antigen and antibody), and oligopeptides is fed to the capillary 10 and stored therein. The capillary 10 is a tube with an outlet 11 at its bottom. The diameter of the tube is very small, allowing the surface tension of the biomolecule solution 3 to suspend it in the outlet 11.

The printer body 20 supporting the capillary 10 may be made of polymethlymethacrylate (PMMA). Whereas the printer body 20 supports one capillary 10 in this embodiment of the present invention, in general the printer body 20 supports a plurality of capillaries 10.

The substrate 30, comprising a biochip or DNA microarray, has a target surface 31 onto which the biomolecules are printed. The substrate 30 is made of silicon in this embodiment of the present invention, but of course, the silicon may be replaced with glass, indium tin oxide (ITO) coated glass, plastic, or other suitable materials. The surface of the substrate 30 inside and outside the circular conductive band 70 is hydrophobic-treated so that the contact angle of the biomolecule solution 3 with the surface is large enough to prevent the biomolecule solution 3 from flowing outwards.

The first electric field forming electrode 40 for forming an electric field is located on the printer body 20 around the circumference of the outlet 11, and is electrically connected to the voltage applying unit 60 via a first electrode lead wire 41. In this embodiment, a circular electrode made of gold is used as the first electric field forming electrode 40, but any other suitable conductor can be used, for example, platinum, copper, conductive polymers, or carbon nano tubes.

The second electric field forming electrode 50 is spaced apart from the first electrode 40 by a predetermined distance. If a voltage is applied, the second electrode 50 forms an electric field together with the first electrode 40. In this embodiment, the second electrode 50 is a circular conductive band 70 opposite the first electrode 40 and surrounding the target surface 31 on the substrate 30. The circular conductive band 70 must be approximately perpendicular to the outlet 11. The circular conductive band 70 is electrically connected to the voltage applying unit 60 via a second electrode lead wire 51. The circular conductive band 70 is made of gold in this embodiment, but any other suitable conductor can be used, for example, platinum, copper, conductive polymers, or carbon nano tubes.

The voltage applying unit 60 is electrically connected to the first electrode 40 and the second electrode 50 to apply an AC voltage between the two, forming an electric field around the biomolecule solution 3 suspending in the outlet 11. Due to the interaction of the electric field and a difference in dielectric constant between the biomolecule solution 3 having a free surface and the surrounding atmosphere, the electric force acts inward on the biomolecule solution 3 from the surroundings, thereby dropping a predetermined amount of the biomolecule solution 3 onto the target surface 31 of the substrate 30. The voltage applying unit 60 has a structure capable of applying an AC voltage and a DC voltage simultaneously at a specific frequency. In this embodiment, the DC voltage is applied substantially simultaneously with the AC voltage, thereby reducing the time to print biomolecules onto the substrate 30. The DC voltage is in the range of 500 to 300,000 V and the AC voltage is in the range of 500 to 300,000 V, and the AC voltage has a frequency of 40 to 1,000 Hz.

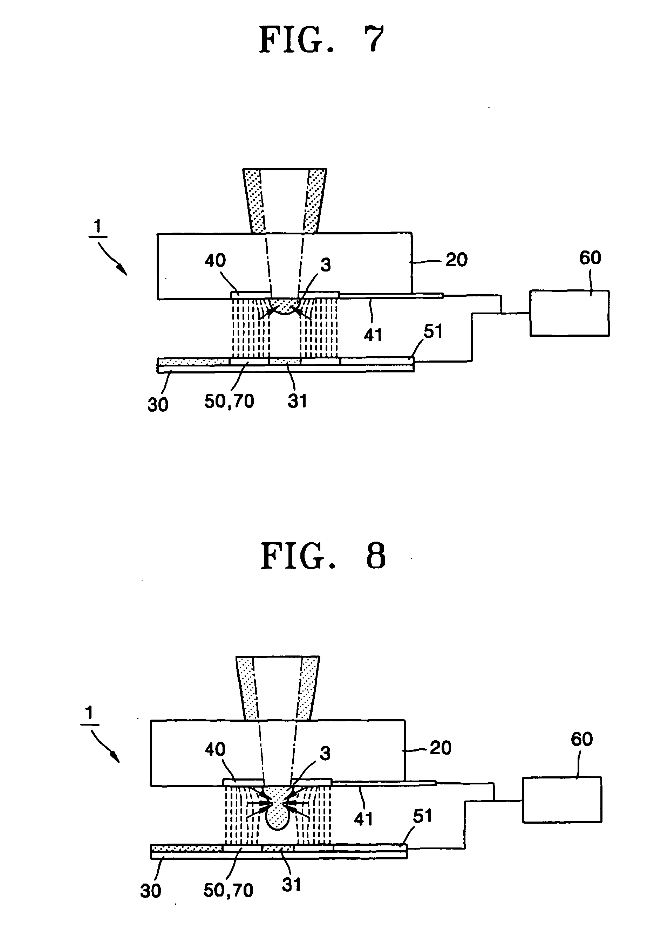

With regard to this constitution of the invention, referring to FIGS. 7 through 10, the method for printing biomolecules on the substrate using an EHD effect according to the embodiment as illustrated in FIG. 4 is explained as follows:

In the first operation, the solution 3 of biomolecules such as nucleic acids (such as probe DNA, RNA, PNA and LNA), proteins (such as antigen and antibody), and oligopeptides is fed to the capillary 10 having the outlet 11 through which the biomolecule solution 3 is discharged. The capillary 10 is a tube with an outlet 11 at its bottom. The diameter of the tube is very small, allowing the surface tension of the biomolecule solution 3 to suspend it in the outlet 11.

Next, the AC voltage and DC voltage are simultaneously applied between the first electrode 40 and the second electrode 50 by the voltage applying unit 60, forming an electric field around the biomolecule solution 3 suspended in the outlet 11 as illustrated in FIG. 7.

If the electric field is applied around the biomolecule solution 3 suspended in the outlet 11 by surface tension applied at a tangent to the circumference of the outlet 11, exceeding gravity, a curved electric potential line is distributed around the biomolecule solution 3 having a contact angle and a radius of curvature as illustrated in FIG. 7. Due to the interaction of the electric field and a difference in dielectric constant between the biomolecule solution 3 having a free surface and the surrounding atmosphere, the EHD force acts inward on the biomolecule solution 3 from the surroundings. A stronger EHD force is applied to the upper portion of the droplet of the biomolecule solution 3, which is located near the contact point of the droplet and the surface of the capillary 10, than to the lower portion of the droplet of the biomolecule solution 3, and thus, as illustrated in FIG. 7, the distribution of the EHD force is totally focused toward the upper portion. Thus, the shape of the droplet is changed as shown in FIG. 8.

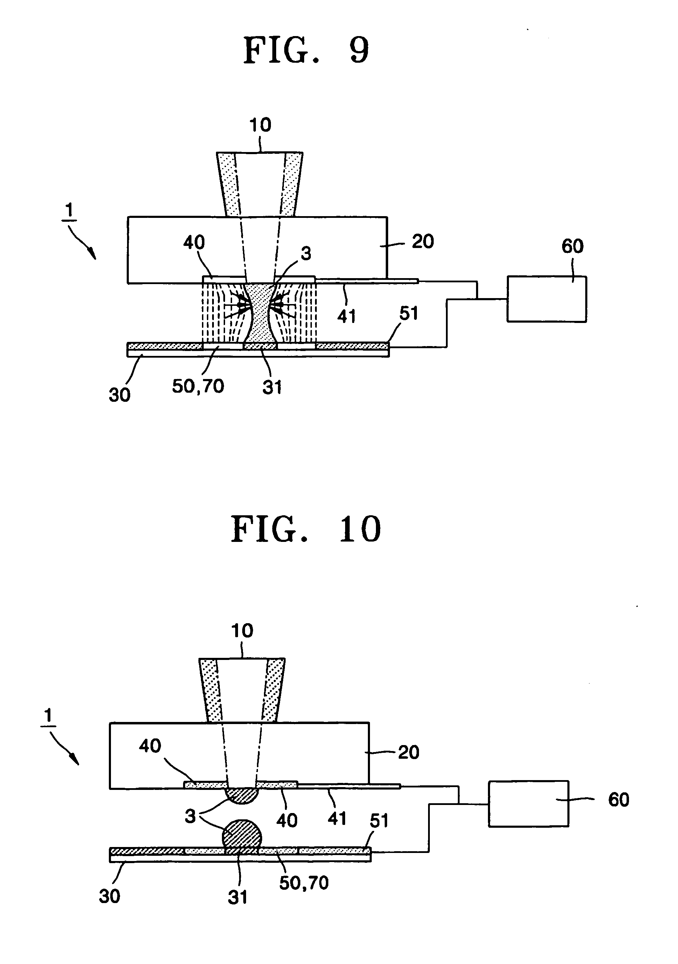

Thereafter, the distribution of the electric field becomes more graduated around the droplet of the biomolecule solution 3, with the upper portion changing to form a groove as illustrated in FIG. 8. As a result, an even stronger EHD force is focused on the grooved upper portion of the droplet of the biomolecule solution 3. The EHD force further changes the droplet, giving it a neck shape in the upper portion as illustrated in FIG. 9. As more EHD force is focused on the neck portion of the droplet, the droplet becomes divided into two droplets as illustrated in FIG. 10. Thus, the droplet suspended in the outlet 11 of the capillary 10 via surface tension drops onto the target surface 31 of the substrate 30.

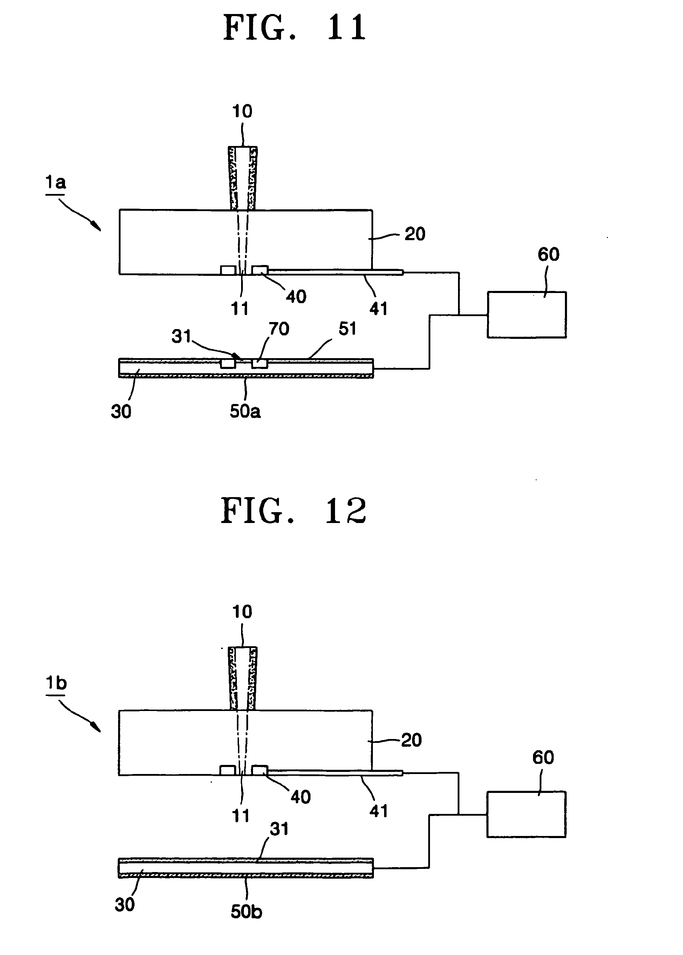

FIG. 11 is a schematic cross-sectional view illustrating a device for printing biomolecules onto a substrate using an EHD effect according to another embodiment of the present invention. The constituent elements that are identical to those shown in the embodiment illustrated in FIG. 4 are labeled with the same reference numerals, and elements which are equivalent but changed are labeled with the same reference numerals with an 'a' suffix. Also, repeat descriptions of elements common to the embodiment illustrated in FIG. 4 are omitted and only the different elements are described. As illustrated in FIG. 11, the device 1 a for printing biomolecules onto a substrate using an EHD effect according to another embodiment of the present invention does not comprise a second electrode lead wire connected to a circular conductive band 70, unlike the embodiment illustrated in FIG. 4. Instead, the device 1 a comprises an electrode plate 50a under the silicon substrate 30 to induce the EHD effect. That is, in this embodiment, the second electric field forming electrode corresponds to the electrode plate 50a disposed under the silicon substrate 30.

FIG. 12 is a schematic cross-sectional view illustrating a device for printing biomolecules onto a substrate using an EHD effect according to another embodiment of the present invention. The constituent elements that are identical to those shown in the embodiment illustrated in FIG. 4 are labeled with the same reference numerals, and elements which are equivalent but changed are labeled with the same reference numerals with a 'b' suffix. Also, repeat descriptions of elements common to the embodiment illustrated in FIG. 4 are omitted and only the different elements are described. As illustrated in FIG. 12, the device 1 b for printing biomolecules onto a substrate using an EHD effect according to another embodiment of the present invention does not comprise a circular conductive band, unlike the embodiment illustrated in FIG. 4. Instead, the device 1b comprises an electrode plate 50b under the silicon substrate 30 to induce the EHD effect. That is, in this embodiment, the second electric field forming electrode corresponds to the electrode plate 50b disposed under the silicon substrate 30. The device 1 b does not comprise a circular conductive band, unlike the embodiment illustrated in FIG. 11.

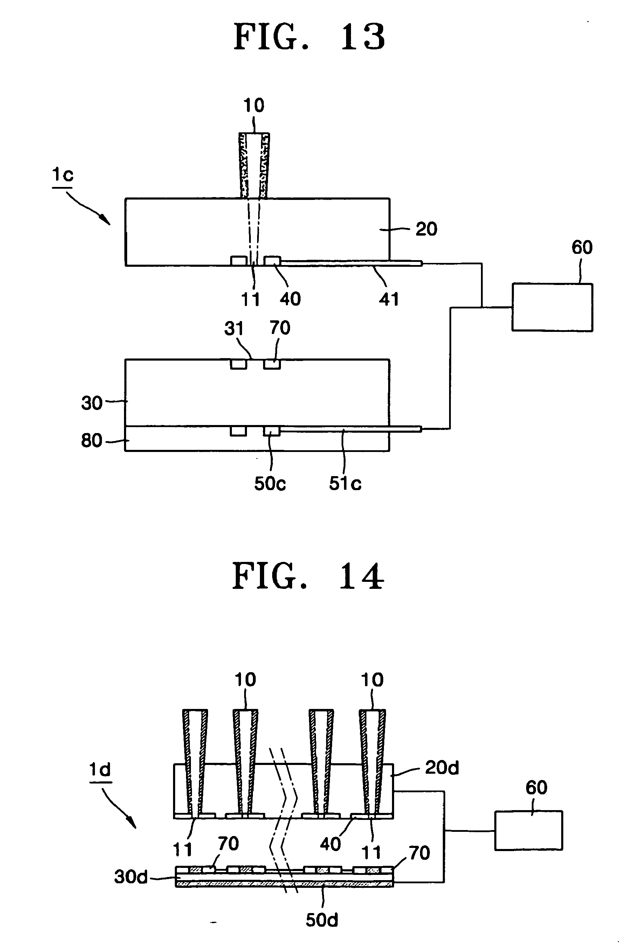

FIG. 13 is a schematic cross-sectional view illustrating a device for printing biomolecules onto a substrate using an EHD effect according to another embodiment of the present invention. The constituent elements that are identical to those shown in the embodiment illustrated in FIG. 4 are labeled with the same reference numerals, and elements which are equivalent but changed are labeled with the same reference numerals with a 'c' suffix. Also, repeat descriptions of elements common to the embodiment illustrated in FIG. 4 are omitted and only the different elements are described. As illustrated in FIG. 13, in the device 1 c for printing biomolecules onto a substrate using an EHD effect according to another embodiment of the present invention, a circular conductive band 50c corresponding to the second electric field forming electrode is located in a stage 80 supporting the silicon substrate 30 to induce the EHD effect, unlike the embodiment illustrated in FIG. 4. By locating the second electric field forming electrode 50c, to which a second electrode lead wire 51 c is connected, in the stage 80 under the silicon substrate 30, the silicon substrate 30 needs no connection to the voltage applying unit 60, allowing easy moving when printing on a stage or conveyer. Thus, it is possible to continuously print biomolecules onto the silicon substrate 30.

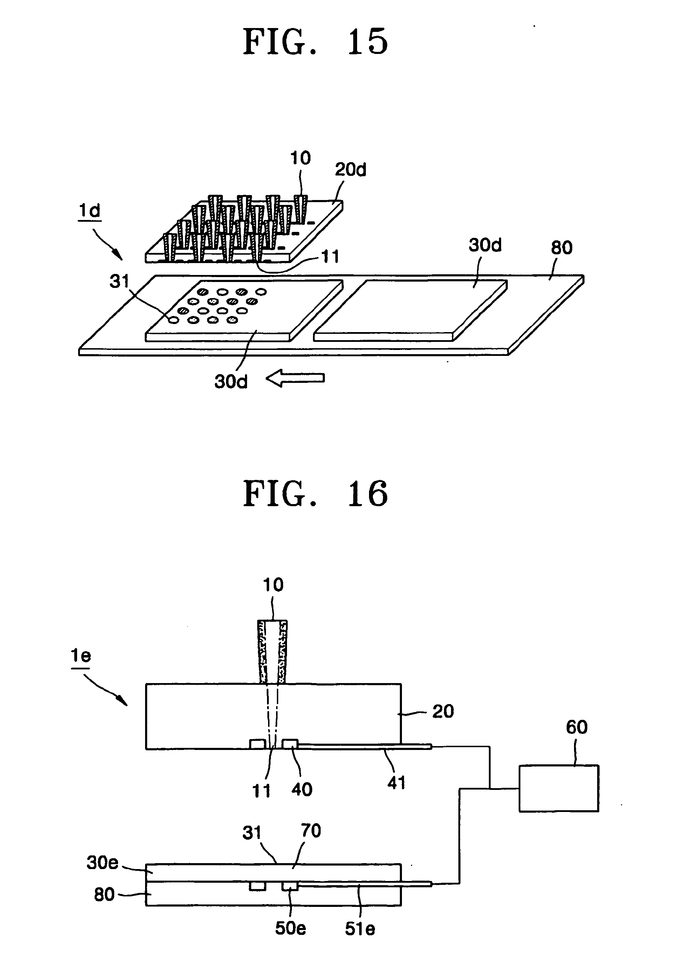

FIG. 14 is a schematic cross-sectional view illustrating a device for printing biomolecules onto a substrate using an EHD effect according to another embodiment of the present invention. The constituent elements that are identical to those shown in the embodiment illustrated in FIG. 4 are labeled with the same reference numerals, and elements which are equivalent but changed are labeled with the same reference numerals with a 'd' suffix. Also, repeat descriptions of elements common to the embodiment illustrated in FIG. 4 are omitted and only the different elements are described. As illustrated in FIG. 14, in the device 1d for printing biomolecules on a substrate using an EHD effect according to another embodiment of the present invention, an electrode plate 50d is located under the silicon substrate 30 to induce the EHD effect, unlike the embodiment illustrated in FIG. 4. That is, the second electric field forming electrode corresponds to the electrode plate 50d under the silicon substrate 30. Further, a plurality of capillaries are supported by the printer body 20 and accordingly a plurality of outlets 11 are provided. A plurality of target surfaces 31 are disposed opposite the outlets 11 on the substrate 30, and a plurality of circular conductive bands 70 are disposed around the target surfaces 31. That is, the outlets 11 of the capillaries 10 on the printer body 20 are arranged at the same pitch as the target surfaces 31 on the substrate 30. This embodiment is especially advantageous when it is intended to print different types of biomolecules at the same time. FIG. 15 is a view illustrating a process for printing biomolecules onto a substrate using the device in FIG. 14. In FIG. 15, a plurality of sheets of silicon substrates 30d, i.e. biochips or DNA microarrys, are manufactured using an EHD effect. After the biomolecules are printed onto the silicon substrate 30d, the substrate 30d moves forwards automatically, and then the biomolecules are continuously printed onto a subsequent substrate 30d, as illustrated in FIG. 15.

FIG. 16 is a schematic cross-sectional view illustrating a device for printing biomolecules onto a substrate using an EHD effect according to another embodiment of the present invention. The constituent elements that are identical to those shown in the embodiment illustrated in FIG. 4 are labeled with the same reference numerals, and elements which are equivalent but changed are labeled with the same reference numerals with an 'e' suffix. Also, repeat descriptions of elements common to the embodiment illustrated in FIG. 4 are omitted and only the different elements are described. As illustrated in FIG. 16, in the device 1e for printing biomolecules onto a substrate using an EHD effect according to another embodiment of the present invention, a circular conductive band 50e corresponding to the second electric field forming electrode is located in a stage 80 supporting the silicon substrate 30e to induce the EHD effect, unlike the embodiment illustrated in FIG. 4. Further, in the device 1e, no circular conductive band 70 is located on the silicon substrate 30e, unlike the embodiment illustrated in FIG. 13.

Hereinafter, embodiments of printing with the devices for printing biomolecules onto a substrate using an EHD effect according to the present invention will be described in detail with reference to FIGS. 4, 5, and 17A through 17D, FIGS. 13 and 18A through 18F, and FIGS. 16 and 19A through 19B.

### Embodiment 1

The printer body 20 was manufactured using polymethlymethacrylate (PMMA) and the circular conductive band 70 around the outlet 11 was made of copper, as illustrated FIG. 5. The voltage applying unit 60 was manufactured in the lab to apply DC and AC voltages simultaneously. The device for printing the biomolecule solution onto a substrate using an EHD effect was manufactured as illustrated in FIG. 4.

The experiments were performed with distilled water, a probe DNA solution, and a solution of protein, HBV antibody.

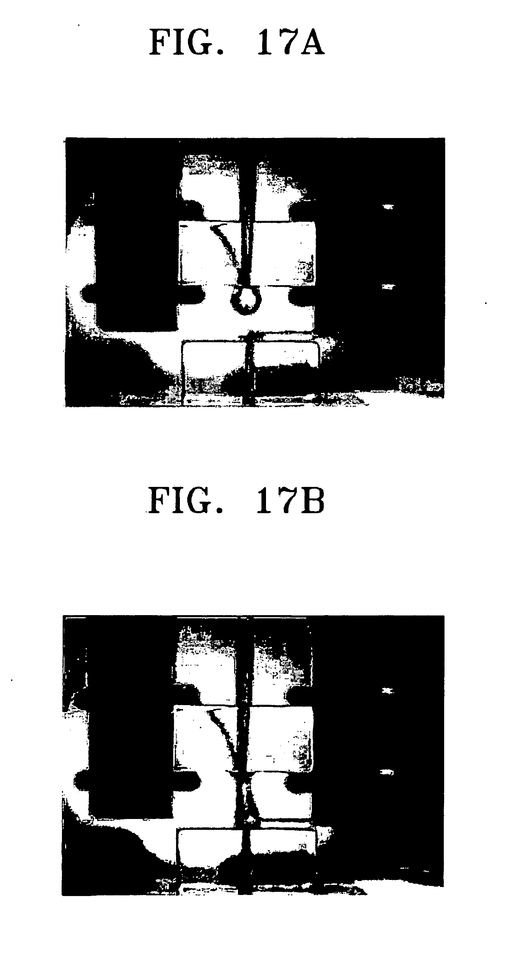

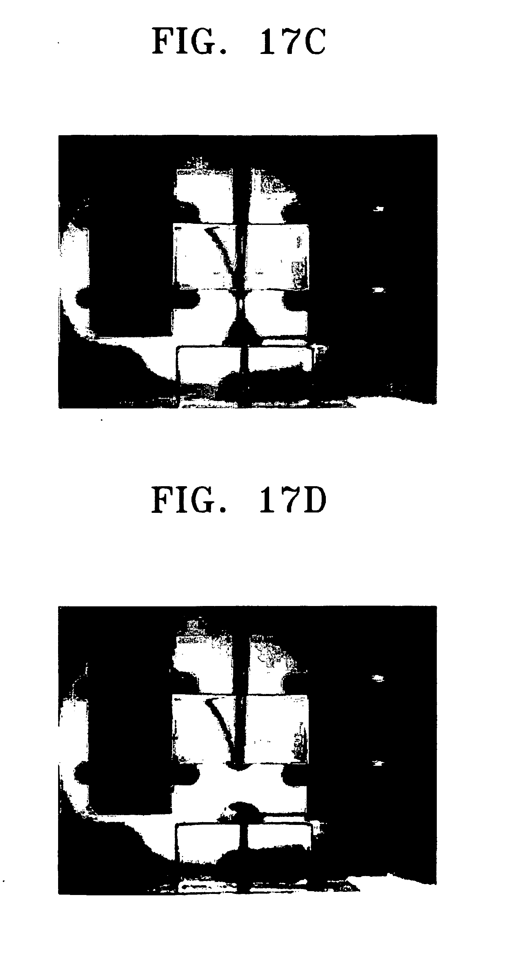

First, printing was performed with distilled water. Voltage from the voltage applying unit 60 was applied using the lower electrode as a ground electrode and the upper electrode as a working electrode. The voltage was set to 1000 V DC and 1000V AC at 50Hz and when a droplet was formed as illustrated in FIG. 17A, the voltage was applied to the electrodes. The phenomenon of the biomolecule solution drops was photographed using Frame Grabber. The shape of the droplet was changed by the EHD effect as illustrated in FIG. 17B, and then the division of the droplet began as illustrated in FIG. 17C, and the droplet was completely divided as illustrated in FIG. 17D.

Secondly, printing was performed with probe DNA. For this, perfect matched probe DNA oligomer (WP MODY3 EXON 3-6, C₆NH₂-5'-CGGAGGAACCGTTTC-3') was prepared. 100µM of the probe DNA, 100µM of PEG, 3µM of Cy5 activated ester were dissolved in a DMSO solution. Then, the solution was tested under the same conditions in the first experiment, and the same result was obtained.

Thirdly, the experiment was performed using HBV antibody dissolved in phosphate buffered saline (PBS) under the same conditions in the first experiment, and again, the same result was obtained.

### Embodiment 2

The device for printing biomolecules onto a substrate using an EHD effect according to the embodiment as illustrated in FIG. 13 was manufactured. The experiments were performed with distilled water, a probe DNA solution, and a solution of protein, HBV antibody as in the Embodiment 1.

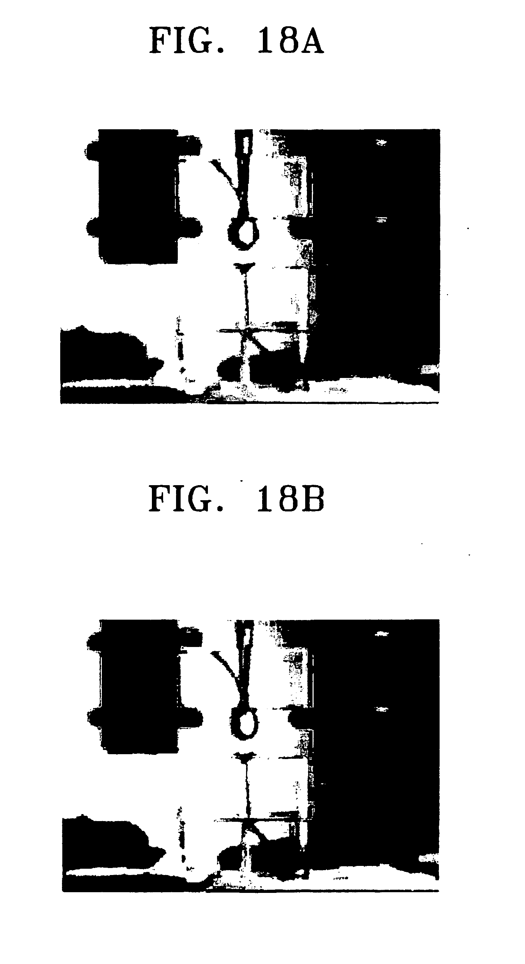

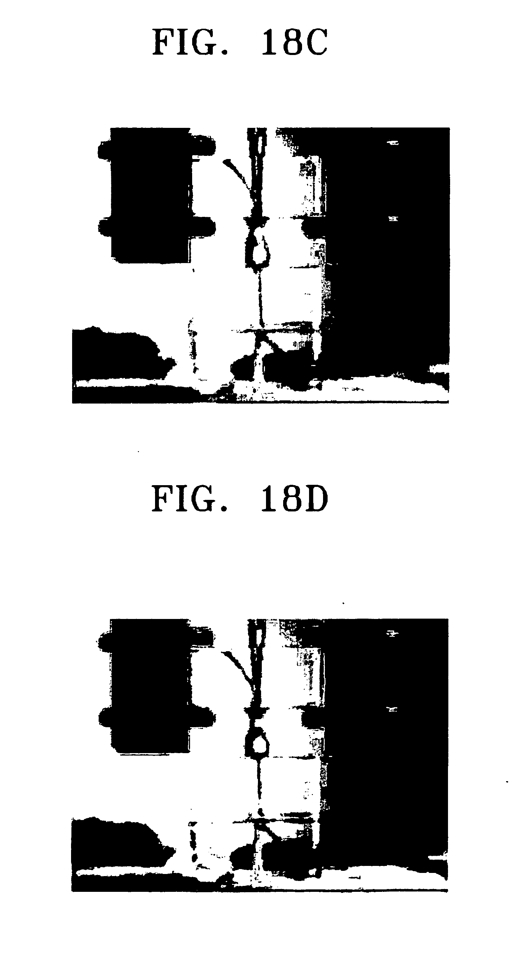

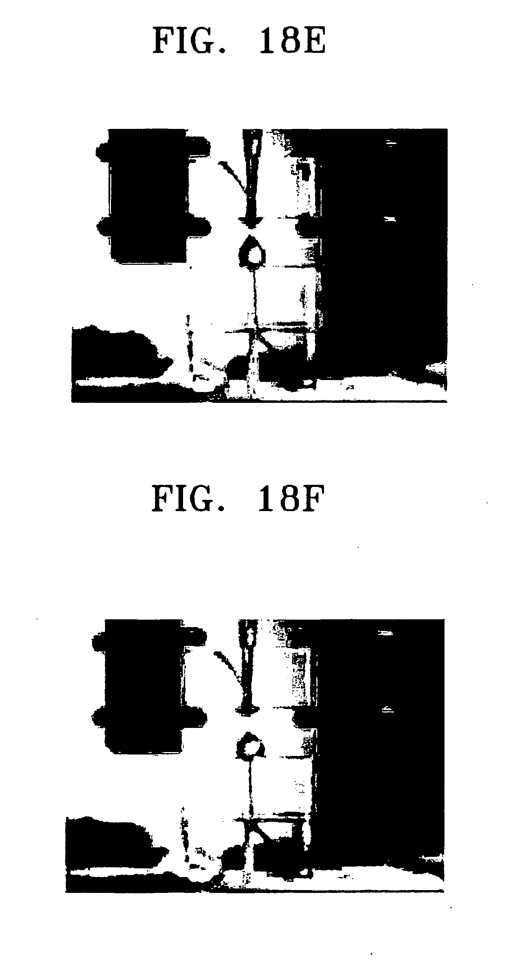

First, EHD printing was performed with distilled water. Voltage from the voltage applying unit 60 was applied using the lower electrode as a ground electrode and the upper electrode as a working electrode. The voltage was set to 1000 V DC and 2000V AC at 50Hz and when a droplet was formed as illustrated in FIG. 18A, the voltage was applied to the electrodes. The phenomenon of the biomolecule solution drops was photographed using Frame Grabber. FIG. 18B illustrates the droplet at the moment when the EDH effect began and FIG. 18C illustrates the shape of the droplet beginning to be changed by the EDH effect. FIG. 18D captures the state of droplet of changing shape. The necking of droplet by the EDH effect is illustrated in FIG. 18E, and finally the droplet was completely divided from the solution as illustrated in FIG. 18F.

Secondly, printing was performed with probe DNA. For this, perfect matched probe DNA oligomer (WP MODY3 EXON 3-6, C₆NH₂-5'-CGGAGGAACCGTTTC-3') was prepared. 100µM of the probe DNA, 100µM of PEG, 3µM of Cy5 activated ester were dissolved in a DMSO solution. Then, the solution was tested under the same conditions in the first experiment, and the same result was obtained.

Thirdly, the experiment was performed using HBV antibody dissolved in PBS under the same conditions in the first experiment, and again, the same result was obtained.

### Embodiment 3

The device for printing biomolecules onto a substrate using an EHD effect according to the embodiment as illustrated in FIG. 16 was manufactured. The experiments were performed with distilled water, a probe DNA solution, and a solution of protein, HBV antibody as in the Embodiment 1.

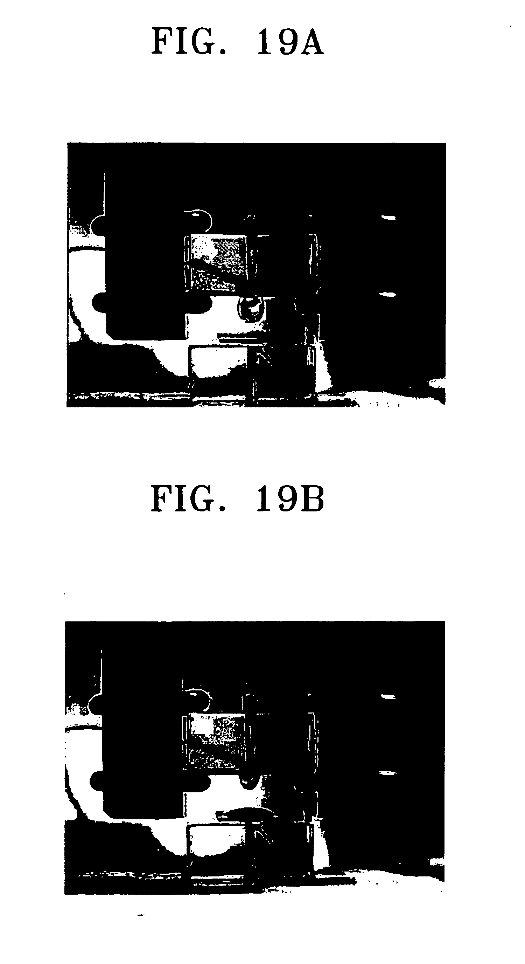

First, EHD printing was performed with distilled water. Voltage from the voltage applying unit 60 was applied using the lower electrode as a ground electrode and the upper electrode as a working electrode. The voltage was set to 1000 V DC and 2500V AC at 50Hz and when a droplet was formed as illustrated in FIG. 19A, the voltage was applied to the electrodes. The phenomenon of the biomolecule solution drops was photographed using Frame Grabber. This time, the droplet was completely divided from the solution as illustrated in FIG. 19B within several microseconds.

Secondly, the experiment was performed with probe DNA. For this, perfect matched probe DNA oligomer (WP MODY3 EXON 3-6, C₆NH₂-5'-CGGAGGAACCGTTTC-3') was prepared. 100µM of the probe DNA, 100µM of PEG, 3µM of Cy5 activated ester were dissolved in a DMSO solution. Then, the solution was tested under the same conditions in the first experiment, and the same result was obtained.

Thirdly, the experiment was performed using HBV antibody dissolved in PBS under the same conditions in the first experiment, and again, the same result was obtained.

As mentioned above, the device for printing biomolecules onto the substrate 30 using an electrohydrodynamic (EHD) effect comprises at least one capillary 10 having an outlet 11 through which the biomolecule solution 3 is discharged; the printer body 20 supporting the capillary 10; the substrate 30 below the outlet 11 having a target surface 31 onto which the biomolecules are deposited; the first electric field forming electrode 40 around the circumference of the outlet 11 on the printer body 20; the second electric field forming electrode 50 spaced apart from the first electrode 40 by a predetermined distance; and the voltage applying unit 60 electrically connected to the first electrode 40 and the second electrode 50 to apply an AC voltage between the first electrode and the second electrode to form an electric field around the biomolecule solution 3 suspended in the outlet 11, and due to the interaction of the electric field and a difference in dielectric constant between the biomolecule solution 3 having a free surface and the surrounding atmosphere, the electric force acts inward on the biomolecule solution 3 from the surroundings, thereby dropping the biomolecule solution 3 onto the target surface 31 of the substrate 30. The advantages of the device are that the process is quick, the biomolecule spots are uniform and easily aligned, and especially it is possible to spot the biomolecules correctly and reproducibly even when the printer body is not fully aligned with the substrate. In addition, the device is applicable to proteins which are sensitive to heat and biomolecules which have neutral charges.

In the Embodiments 1, 2 and 3, the simultaneous application of an AC voltage and a DC voltage between the first electric field forming electrode 40 and the second electric field forming electrode 50 to generate an electric field is described in detail. However, it is of course possible to apply only a DC voltage if required.

Although a circular electrode was used as the first electric field forming electrode 40 in the Embodiments 1, 2 and 3, various types of electrode can also be used.

As mentioned above, according to the present invention, using the device and method for printing biomolecules onto the substrate using an EHD effect, the process is quick, the biomolecule spots are uniform and easily aligned, and especially it is possible to spot the biomolecules correctly and reproducibly even when the printer body is not fully aligned with the substrate. In addition, the device and method are applicable to proteins which are sensitive to heat and biomolecules which have neutral charges.

Further, the present invention uses a substrate made of silicon, thereby permitting integration of silicon.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A device for printing biomolecules onto a substrate using an electrohydrodynamic (EHD) effect, comprising;
at least one capillary (10) having an outlet (11) through which a feeding solution of biomolecules selected from the group consisting of nucleic acids, proteins, and oligopeptides is discharged, the nucleic acids being selected from the group consisting of probe DNA, RNA, peptide nucleic acid (PNA), and LNA and the proteins being selected from the group consisting of antigen and antibody;
a printer body (20) supporting the at least one capillary;
a substrate (30) below the outlet having a target surface (31) onto which the biomolecules are deposited;
a first electric field forming electrode (40) located on the printer body around the circumference of the outlet;
a second electric field forming electrode (50) spaced apart from the first electrode by a predetermined distance; and
a voltage applying unit (60) which is electrically connected to the first electrode and the second electrode to apply an alternating current (AC) voltage between the first electrode and the second electrode so that an electric field may be formed around the biomolecule solution suspended in the outlet, and due to the interaction of the electric field and a difference in dielectric constant between the biomolecule solution having a free surface and the surrounding atmosphere, the electric force acts inward on the biomolecule solution from the surroundings, thereby dropping a predetermined amount of the biomolecule solution onto the target surface of the substrate.

2. The device of claim 1, wherein the voltage applying unit is capable of applying an AC voltage and a direct current (DC) voltage simultaneously, and the DC voltage is applied substantially simultaneously when the AC voltage is applied for forming an electric field.

3. The device of claim 2, wherein the DC voltage is in the range of 500 to 300,000 V and the AC voltage is in the range of 500 to 300,000 V.

4. The device of claim 3, wherein the AC voltage has a frequency of 40 to 1,000 Hz.

5. The device of claim 1, wherein the substrate is made of silicon.

6. The device of claim 1, wherein the first electric field forming electrode is a circular electrode made of gold.

7. The device of claim 1, further comprising a circular conductive band opposite the first electric field forming electrode surrounding the target surface on the substrate.

8. The device of claim 7, wherein the circular conductive band is approximately perpendicular to the outlet.

9. The device of claim 7, wherein the circular conductive band is the second electric field forming electrode and is made of gold.

10. The device of claim 7, wherein the second electric field forming electrode is located in a stage supporting the substrate.

11. The device of claim 7, wherein the substrate surface inside and outside the circular conductive band is hydrophobic-treated so that the contact angle of the solution with the surface is large enough to prevent the solution from flowing outwards.

12. The device of claim 1, wherein a plurality of capillaries are supported by the printer body, and the outlets of the capillaries are arranged at the same pitch as a plurality of target surfaces on the substrate.

13. A method for printing biomolecules onto a substrate using an EHD effect, comprising the operations of;
feeding a solution of biomolecules selected from the group consisting of nucleic acids, proteins, and oligopeptides to a capillary having an outlet through which the biomolecule solution is discharged, the nucleic acids being selected from the group consisting of probe DNA, RNA, PNA, and LNA and the proteins being selected from the group consisting of antigen and antibody; and
applying an AC voltage between a first electric field forming electrode around the circumference of the outlet and a second electric field forming electrode spaced apart from the first electrode by a predetermined distance from a voltage applying unit capable of applying an AC voltage which is electrically connected to the first electrode and the second electrode, so that an electric field may be formed around the biomolecule solution suspended in the outlet, and due to the interaction of the electric field and a difference in dielectric constant between the biomolecule solution having a free surface and the surrounding atmosphere, the electric force acts inward on the biomolecule solution from the surroundings, thereby dropping a predetermined amount of the biomolecule solution onto a target surface of a substrate below the outlet.

14. The method of claim 13, wherein in the operation of applying an AC voltage, a DC voltage is also applied, substantially simultaneously with the AC voltage.

15. The method of claim 14, wherein the DC voltage is in the range of 500 to 300,000 V and the AC voltage is in the range of 500 to 300,000 V.

16. The method of claim 15, wherein the AC voltage has a frequency of 40 to 1,000 Hz.

17. The method of claim 13, wherein the substrate is made of silicon.

18. The method of claim 13, wherein the first electric field forming electrode is a circular electrode made of gold.

19. The method of claim 13, wherein a circular conductive band is located opposite to the first electric field forming electrode surrounding the target surface on the substrate.

20. The method of claim 19, wherein the circular conductive band is approximately perpendicular to the outlet.

21. The method of claim 19, wherein the circular conductive band is the second electric field forming electrode and is made of gold.

22. The method of claim 19, wherein the second electric field forming electrode is in the form of an electrode plate and is located in a stage supporting the substrate.

23. The method of claim 19, wherein the substrate surface inside and outside the circular conductive band is hydrophobic-treated so that the contact angle of the solution with the surface is large enough to prevent the solution from flowing outwards.

24. The method of claim 13, wherein a plurality of capillaries are supported by the printer body, and the outlets of the capillaries are arranged at the same pitch as a plurality of target surfaces on the substrate.

## Patentansprüche

1. Vorrichtung zum Drucken von Biomolekülen auf ein Substrat unter Ausnutzung eines elektrohydrodynamischen (EHD) Effekts, umfassend:
wenigstens eine Kapillare (10) mit einem Auslass (11), durch welchen eine Zufuhr- bzw. Beschickungslösung aus Biomolekülen, welche aus der Gruppe ausgewählt ist, bestehend aus Nukleinsäuren, Proteinen und Oligopeptiden, abgelassen wird, wobei die Nukleinsäuren aus der Gruppe gewählt sind, bestehend aus Sonden-DNA (probe DNA), RNA, Peptidnukleinsäure (PNA) und LNA, und wobei die Proteine gewählt sind aus der Gruppe bestehend aus Antigen und Antikörper;
ein Druckerkörper (20), welcher die wenigstens eine Kapillare trägt;
ein Substrat (30) unter dem Auslass mit einer Zielfläche (31) auf welche die Biomoleküle abgeschieden werden;
eine erste, ein elektrisches Feld bildende Elektrode (40), angeordnet auf dem Druckerkörper um den Umfang des Auslasses;
eine zweite, ein elektrisches Feld formende Elektrode (50), beabstandet von der ersten Elektrode um einen vorbestimmten Abstand; und
eine spannungsanlegende Einheit (60), welche elektrisch mit der ersten Elektrode und der zweiten Elektrode verbunden ist, um eine Wechselspannung (AC) zwischen der ersten Elektrode und der zweiten Elektrode anzulegen, so dass ein elektrisches Feld um die Biomoleküllösung, welche in dem Auslass suspendiert ist, gebildet wird, und aufgrund der Interaktion des elektrischen Feldes und eines Unterschiedes in der dielektrischen Konstante zwischen der Biomoleküllösung mit einer freien Oberfläche und der umgebenden Atmosphäre, wirkt die elektrische Kraft von dem Umfeld nach innen auf die Biomoleküllösung, wodurch eine vorbestimmte Menge der Biomoleküllösung auf die Zielfläche des Substrates tropft.

2. Vorrichtung nach Anspruch 1, wobei die spannungsanlegende Einheit geeignet ist, gleichzeitig eine Art Wechelspannung und eine Gleichspannung (DC) anzulegen, und wobei die Gleichspannung im Wesentlichen gleichzeitig angelegt wird, wenn die Wechselspannung angelegt wird, um ein elektrisches Feld zu bilden.

3. Vorrichtung nach Anspruch 2, wobei die Gleichspannung in dem Bereich von 500 bis 300.000 V und die Wechselspannung in dem Bereich von 500 bis 300.000 V liegt.

4. Vorrichtung nach Anspruch 3, wobei die Wechselspannung eine Frequenz von 40 bis 1.000 Hz aufweist.

5. Vorrichtung nach Anspruch 1, wobei das Substrat aus Silizium hergestellt ist.

6. Vorrichtung nach Anspruch 1, wobei die erste, das elektrische Feld bildende Elektrode eine kreisförmige Elektrode ist, welche aus Gold hergestellt ist.

7. Vorrichtung nach Anspruch 1, des Weiteren umfassend ein kreisförmiges leitendes Band, welches der ersten, ein elektrisches Feld bildenden Elektrode gegenüberliegt, die die Zielfläche auf dem Substrat umgibt.

8. Vorrichtung nach Anspruch 7, wobei sich das kreisförmige leitende Band ungefähr senkrecht zu dem Auslass befindet.

9. Vorrichtung nach Anspruch 7, wobei das kreisförmige leitende Band die zweite, ein elektrisches Feld bildende Elektrode ist und aus Gold hergestellt ist.

10. Vorrichtung nach Anspruch 7, wobei die zweite, ein elektrisches Feld bildende Elektrode in einer das Substrat tragenden Stufe angeordnet ist.

11. Vorrichtung nach Anspruch 7, wobei die Substratoberfläche innerhalb und außerhalb des kreisförmigen leitenden Bandes hydrophob behandelt ist, so dass der Kontaktwinkel der Lösung mit der Oberfläche groß genug ist, um zu verhindern, dass die Lösung nach außen fließt.

12. Vorrichtung nach Anspruch 1, wobei eine Vielzahl von Kapillaren von dem Druckerkörper getragen wird, und die Auslässe der Kapillaren mit dem gleichen Abstand wie eine Vielzahl von Zielflächen auf dem Substrat angeordnet sind.

13. Verfahren zum Drucken von Biomolekülen auf ein Substrat unter Verwendung eines EHD-Effekts, umfassend die Schritte
Zuführen einer Lösung aus Biomolekülen gewählt aus der Gruppe bestehend aus Nukleinsäuren, Proteinen, Oligopeptiden zu einer Kapillare mit einem Auslass, durch welchen die Biomoleküllösung abgelassen wird, wobei die Nukleinsäuren aus der Gruppe ausgewählt werden, bestehend aus Sonden- DNA, RNA, PNA und LNA und die Proteine aus der Gruppe ausgewählt werden, bestehend aus Antigen und Antikörper; und
Anlegen einer Wechselspannung zwischen einer ersten, ein elektrisches Feld bildenden Elektrode um den Umfang des Auslasses und einer zweiten, ein elektrisches Feld bildenden Elektrode, welche von der ersten Elektrode um einen vorbestimmten Abstand beabstandet ist, durch eine spannungsanlegende Einheit, welche geeignet ist, eine Wechselspannung anzulegen, welche elektrisch mit der ersten Elektrode und der zweiten Elektrode verbunden ist, so dass ein elektrisches Feld um die Biomoleküllösung gebildet wird, welche in dem Auslass suspendiert ist, und aufgrund der Interaktion des elektrischen Feldes und eines Unterschieds der dielektrischen Konstante zwischen der Biomoleküllösung, welche eine freie Oberfläche aufweist, und der umgebenden Atmosphäre, wirkt die elektrische Kraft von dem Umfeld nach innen auf die Biomoleküllösung, wodurch eine vorbestimmte Menge der Biomoleküllösung auf eine Zielfläche auf einem Substrat unter dem Auslass tropft.

14. Verfahren nach Anspruch 13, wobei bei dem Schritt des Anlegens einer Wechselspannung auch eine Gleichspannung angelegt wird, im Wesentlichen gleichzeitig mit der Wechselspannung.

15. Verfahren nach Anspruch 14, wobei die Gleichspannung in dem Bereich von 500 bis 300.000 V liegt und die Wechselspannung in dem Bereich von 500 bis 300.000 V liegt.

16. Verfahren nach Anspruch 15, wobei die Wechselspannung eine Frequenz von 40 bis 1.000 Hz aufweist.

17. Verfahren nach Anspruch 13, wobei das Substrat aus Silizium hergestellt ist.

18. Verfahren nach Anspruch 13, wobei die erste, ein elektrisches Feld formende Elektrode eine kreisförmige Elektrode ist, welche aus Gold hergestellt ist.

19. Verfahren nach Anspruch 13, wobei ein kreisförmiges leitendes Band der ersten, ein elektrisches Feld formenden Elektrode gegenüberliegend angeordnet ist, welche die Zielfläche auf dem Substrat umgibt.

20. Verfahren nach Anspruch 19, wobei sich das kreisförmige leitende Band ungefähr senkrecht zu dem Auslass befindet.

21. Verfahren nach Anspruch 19, wobei das kreisförmige leitende Band die zweite, ein elektrisches Feld formende Elektrode ist, und aus Gold hergestellt ist.

22. Verfahren nach Anspruch 19, wobei die zweite, ein elektrisches Feld formende Elektrode in der Form einer Elektrodenplatte vorliegt und in einer Stufe angeordnet ist, welche das Substrat trägt.

23. Verfahren nach Anspruch 19, wobei die Substratfläche innerhalb und außerhalb des kreisförmigen leitenden Bandes hydrophob behandelt ist, so dass der Kontaktwinkel der Lösung mit der Oberfläche groß genug ist, um zu verhindern, dass die Lösung nach außen fließt.

24. Verfahren nach Anspruch 13, wobei eine Vielzahl von Kapillaren von dem Druckerkörper getragen wird, und die Auslässe der Kapillaren mit dem gleichen Abstand wie eine Vielzahl von Zielflächen auf dem Substrat angeordnet sind.

## Revendications

1. Dispositif d'impression de biomolécules sur un substrat au moyen d'un effet électrohydrodynamique (EHD), comprenant :
au moins un capillaire (10) ayant un orifice de sortie (11) à travers lequel une solution d'alimentation de biomolécules choisies dans le groupe constitué des acides nucléiques, des protéines et des oligopeptides est évacuée, les acides nucléiques étant choisis dans le groupe constitué des ADN sondes, des ARN, des acides nucléiques peptidiques (PNA) et des acides nucléiques verrouillés (LNA) et les protéines étant choisies dans le groupe constitué des antigènes et des anticorps ;
un corps d'imprimante (20) supportant ledit au moins un capillaire ;
un substrat (30) situé en dessous de l'orifice de sortie, ayant une surface cible (31) sur laquelle les biomolécules sont déposées ;
une première électrode formant un champ électrique (40) située sur le corps d'imprimante autour de la circonférence de l'orifice de sortie ;
une seconde électrode formant un champ électrique (50) éloignée de la première électrode d'une distance prédéterminée ; et
une unité d'application de tension (60) qui est électriquement connectée à la première électrode et à la seconde électrode pour appliquer une tension en courant alternatif (CA) entre la première électrode et la seconde électrode de sorte qu'un champ électrique peut être formé autour de la solution de biomolécules en suspension dans l'orifice de sortie, et suite à l'interaction du champ électrique et à une différence de constante diélectrique entre la solution de biomolécules ayant une surface libre et l'atmosphère environnante, la force électrique agit sur la solution de biomolécules en s'exerçant des abords vers l'intérieur, ce qui fait tomber une quantité prédéterminée de la solution de biomolécules sur la surface cible du substrat.

2. Dispositif de la revendication 1, dans lequel l'unité d'application de tension est capable d'appliquer une tension CA et une tension en courant continu (CC) simultanément, et la tension CC est appliquée quasi simultanément au moment où la tension CA est appliquée pour former un champ électrique.

3. Dispositif de la revendication 2, dans lequel la tension CC est comprise entre 500 et 300 000 V et la tension CA est comprise entre 500 et 300 000 V.

4. Dispositif de la revendication 3, dans lequel la tension CA a une fréquence de 40 à 1000 Hz.

5. Dispositif de la revendication 1, dans lequel le substrat est constitué de silicium.

6. Dispositif de la revendication 1, dans lequel la première électrode formant un champ électrique est une électrode circulaire constituée d'or.

7. Dispositif de la revendication 1, comprenant en outre une bande conductrice circulaire en face de la première électrode formant un champ électrique entourant la surface cible sur le substrat.

8. Dispositif de la revendication 7, dans lequel la bande conductrice circulaire est à peu près perpendiculaire à l'orifice de sortie.

9. Dispositif de la revendication 7, dans lequel la bande conductrice circulaire est la seconde électrode formant un champ électrique et est constituée d'or.

10. Dispositif de la revendication 7, dans laquelle la seconde électrode formant un champ électrique est située dans un étage supportant le substrat.

11. Dispositif de la revendication 7, dans lequel la surface du substrat à l'intérieur et à l'extérieur de la bande conductrice circulaire est traitée pour être hydrophobe si bien que l'angle de contact de la solution avec la surface est suffisamment grand pour empêcher la solution de s'écouler vers l'extérieur.

12. Dispositif de la revendication 1, dans lequel une pluralité de capillaires sont supportés par le corps d'imprimante, et les orifices de sortie des capillaires sont agencés au même pas qu'une pluralité de surfaces cibles sur le substrat.

13. Procédé d'impression de biomolécules sur un substrat au moyen d'un effet EHD, comprenant les étapes consistant à :
alimenter une solution de biomolécules choisies dans le groupe constitué des acides nucléiques, des protéines et des oligopeptides dans un capillaire ayant un orifice de sortie à travers lequel la solution de biomolécules est évacuée, les acides nucléiques étant choisis dans le groupe constitué des ADN sondes, des ARN, des PNA et des LNA et les protéines étant choisies dans le groupe constitué des antigènes et des anticorps ; et
appliquer une tension CA entre une première électrode formant un champ électrique située autour de la circonférence de l'orifice de sortie et une seconde électrode formant un champ électrique éloignée de la première électrode d'une distance prédéterminée à partir d'une unité d'application de tension capable d'appliquer une tension CA qui est électriquement connectée à la première électrode et à la seconde électrode, de sorte qu'un champ électrique peut être formé autour de la solution de biomolécules en suspension dans l'orifice de sortie, et suite à l'interaction du champ électrique et à une différence de constante diélectrique entre la solution de biomolécules ayant une surface libre et l'atmosphère environnante, la force électrique agit sur la solution de biomolécules en s'exerçant des abords vers l'intérieur, ce qui fait tomber une quantité prédéterminée de la solution de biomolécules sur une surface cible d'un substrat en dessous de l'orifice de sortie.

14. Procédé de la revendication 13, dans lequel dans l'étape consistant à appliquer une tension CA, une tension CC est également appliquée, quasi simultanément avec la tension CA.

15. Procédé de la revendication 14, dans lequel la tension CC est comprise entre 500 et 300 000 V et la tension CA est comprise entre 500 et 300 000 V.

16. Procédé de la revendication 15, dans lequel la tension CA a une fréquence de 40 à 1000 Hz.

17. Procédé de la revendication 13, dans lequel le substrat est constitué de silicium.

18. Procédé de la revendication 13, dans lequel la première électrode formant un champ électrique est une électrode circulaire constituée d'or.

19. Procédé de la revendication 13, dans lequel une bande conductrice circulaire est située face à la première électrode formant un champ électrique entourant la surface cible sur le substrat.

20. Procédé de la revendication 19, dans lequel la bande conductrice circulaire est à peu près perpendiculaire à l'orifice de sortie.

21. Procédé de la revendication 19, dans lequel la bande conductrice circulaire est la seconde électrode formant un champ électrique et est constituée d'or.

22. Procédé de la revendication 19, dans lequel la seconde électrode formant un champ électrique se présente sous la forme d'une plaque-électrode et est située dans un étage supportant le substrat.

23. Procédé de la revendication 19, dans lequel la surface du substrat à l'intérieur et à l'extérieur de la bande conductrice circulaire est traitée pour être hydrophobe si bien que l'angle de contact de la solution avec la surface est suffisamment grand pour empêcher la solution de s'écouler vers l'extérieur.

24. Procédé de la revendication 13, dans lequel une pluralité de capillaires sont supportés par le corps d'imprimante, et les orifices de sortie des capillaires sont agencés au même pas qu'une pluralité de surfaces cibles sur le substrat.
